# EUROPÄISCHE PATENTSCHRIFT

(11) **EP 4 046 488 B1**
(45) Veröffentlichungstag und Bekanntmachung des Hinweises auf die Patenterteilung: **25.10.2023**
(21) Anmeldenummer: 22155376.1
(22) Anmeldetag: 07.02.2022
(51) Int. Cl.: A01M 29/24

(54) **VORRICHTUNG ZUM KONTAKTIEREN EINER SPANNUNGSFÜHRENDEN LEITUNG EINER KLEINTIERABWEHREINRICHTUNG UND MIT EINER DERARTIGEN VORRICHTUNG AUSGESTATTETE KLEINTIERABWEHREINRICHTUNG**
DEVICE FOR CONTACTING A VOLTAGE-CARRYING LINE OF A SMALL ANIMAL DETERRENT, AND SMALL ANIMAL DETERRENT WITH SUCH A DEVICE
DISPOSITIF POUR METTRE EN CONTACT UN CONDUCTEUR SOUS TENSION D'UN DISPOSITIF DE PROTECTION CONTRE LES PETITS ANIMAUX ET DISPOSITIF DE PROTECTION CONTRE LES PETITS ANIMAUX ÉQUIPÉ D'UN TEL DISPOSITIF

(30) Priorität: 23.02.2021 DE 102021104235
(43) Veröffentlichungstag der Anmeldung: 24.08.2022
(73) Patentinhaber: Norbert Schaub GmbH, 79395 Neuenburg am Rhein (DE)
(72) Erfinder: Schelb, Hans-Jörg, 79219 Staufen (DE)
(74) Vertreter: RACKETTE Patentanwälte PartG mbB

(56) Entgegenhaltungen:
- DE-A1-102014 016 797
- DE-B4-102014 000 957
- DE-U1-202005 003 756
- DE-U1-202010 003 007

## Beschreibung

Die Erfindung betrifft eine Vorrichtung zum Kontaktieren einer spannungsführenden Leitung einer Kleintierabwehreinrichtung gemäß dem Oberbegriff des Anspruchs 1.

Die Erfindung betrifft weiterhin eine Kleintierabwehreinrichtung, die mit einer derartigen Vorrichtung ausgestattet ist.

Aus US 5 690 505 A ist eine Vorrichtung zum Kontaktieren von zwei spannungsführenden Leitungen bekannt, um diese elektrisch miteinander zu verbinden. Die Vorrichtung verfügt über ein Bodenteil, das zur Aufnahme von spannungsführenden Leitungen eingerichtet ist. Weiterhin ist ein elektrisch leitfähiges sowie mit dornartigen Kontaktelementen ausgebildetes Kontaktteil vorhanden, das mittels einer Scharnieranordnung in Gestalt eines biegsamen Verbindungstreifens an einem gegenüber dem Bodenteil schwenkbaren sowie über eine Rastanordnung mit dem Bodenteil verbindbaren Deckelteil auf dessen in geschlossener Anordnung der Vorrichtung dem Bodenteil zugewandten Innenseite angebracht ist. Bei einem Schließen der Vorrichtung kommen die Kontaktelemente mit den beiden Leitungen elektrisch in Verbindung und kontaktieren diese dadurch elektrisch.

Aus US 5 041 013 A ist eine nach Art eines Netzsteckers ausgebildete Vorrichtung zum Verbinden von Enden zweier elektrisch leitfähiger Leitungen mit jeweils einem außenseitigen Steckelement durch Zusammenklappen von zwei Schwenkteilen bekannt, von denen eines zwei Einstechdorne und das andere die Leitungen aufnimmt.

Aus DE 10 2014 000 957 A1 sind eine Vorrichtung und eine Kleintierabwehreinrichtung bekannt, wobei diese vorbekannte Vorrichtung zum Kontaktieren einer spannungsführenden Leitung einer Kleintierabwehreinrichtung über ein Bodenteil verfügt, das zur Aufnahme einer spannungsführenden Leitung eingerichtet ist. Weiterhin ist eine elektrisch leitfähige sowie mit dornartigen Kontaktelementen ausgebildete Kontaktplatte vorhanden, die mit dem Bodenteil derart verbindbar ist, dass in einer miteinander verbundenen Kontaktanordnung von Bodenteil und Kontaktplatte die Kontaktelemente mit der spannungsführenden Leitung elektrisch verbunden ist. Zum Verbinden mit dem Bodenteil ist die Kontaktplatte mit einer Anzahl von gegenüber einem flachen Bereich der Kontaktplatte abgewinkelten Rastzungen ausgebildet, die an ihren freien Enden Rasthaken aufweisen, die in zugeordnete Rastaufnahmen des Bodenteils eingreifen und dadurch die Kontaktplatte sehr zuverlässig mit dem Bodenteil verbinden.

Aus DE 26 39 044 A1 ist eine Ultraschallvorrichtung insbesondere zum Vertreiben von Mäusen bekannt.

Aus DE 20 2014 011 452 U1 ist eine Vorrichtung zur Abwehr von Kleinsäuger mittels Stromschlägen bekannt, die über eine kapazitive Sensoreinheit zum Erfassen des Eindringens vom Kleinsäugern und über eine Aktoreinheit zum Auslösen eines Stromschlags verfügt.

Aus DE 20 2005 003 756 U1 ist ein elektrischer Leitungsanschluss für Hochspannungskontaktplatten, insbesondere von Marderscheuchen, bekannt, bei dem eine mit Kontaktelementen ausgestattete Hochspannungskontaktplatte über Schrauben an einem eine spannungsführende Leitung aufnehmenden Bodenteil unter Einstechen der Kontaktelemente in die Leitung befestigbar ist.

Aus DE 20 2010 003 007 U1 ist ein Kontaktplattenhalter für Hochspannungs-Marderscheuchen bekannt, bei dem eine flache Hochspannungskontaktplatte über elektrisch leitende Schrauben an einem eine spannungsführende Leitung aufnehmenden Bodenteil befestigbar ist, wobei der elektrische Kontakt zwischen der Hochspannungskontaktplatte und der Leitung über die Schrauben erfolgt.

Aus DE 10 2014 016 797 A1 ist eine dreiteilige Anordnung zur Vergrämen von Kleintieren mit zwei in einem Abstand einander gegenüberliegenden Kontaktplatten bekannt, die einen mit einer doppeladrigen Leitung bestückten Isolationskörper umschließen. Jede Kontaktplatte ist mit wenigstens einem Dorn ausgebildet, der in jeweils eine Leitung einsticht, so dass bei unterschiedlichen Spannungen in den Leitungen die Kontaktplatten auf unterschiedlichen Potenzialen liegen und bei Kontakt eines Kleintieres mit den beiden Kontaktplatten ein Vergrämungseffekt erzielt ist.

Der Erfindung liegt die Aufgabe zugrunde, eine Vorrichtung der eingangs genannten Art anzugeben, die sich durch eine sehr einfache Handhabung und dennoch sehr verlässliche Kontaktierung wenigstens einer Kontaktplatte mit einer Leitung auszeichnet.

Der Erfindung liegt weiterhin die Aufgabe zugrunde, eine mit einer derartigen Vorrichtung ausgestattete Kleintierabwehreinrichtung anzugeben, die einen verlässlichen Schutz bietet.

Die erstgenannte Aufgabe wird bei einer Vorrichtung der eingangs genannten Art erfindungsgemäß mit den kennzeichnenden Merkmalen des Anspruchs 1 gelöst.

Die zweitgenannte Aufgabe wird bei einer Kleintierabwehreinrichtung erfindungsgemäß mit den Merkmalen des Anspruchs 12 gelöst.

Dadurch, dass erfindungsgemäß ein Deckelteil vorhanden ist, auf dem die oder jede betriebstypisch zum Abwehren von Kleintieren wie typischerweise Marder durch Vergrämen auf ein bestimmtes Potenzial gelegte Kontaktplatte außenseitig aufliegt sowie an diesem angebracht ist und dass das Deckelteil über eine Scharnieranordnung schwenkbar an dem Bodenteil angebracht sowie mit einer Rastanordnung mit dem Bodenteil gegen ein unbeabsichtigtes Aufschwenken gesichert ist, lässt sich zum einen die einteilige Vorrichtung aufgrund der Verliersicherheit sehr einfach handhaben und zum anderen die Kontaktierung der oder jeder Kontaktplatte mit einer Leitung sehr verlässlich bewerkstelligen, da das Deckelteil und das Bodenteil an einer Seite bereits über eine Scharnieranordnung miteinander verbunden sind und lediglich auf einer Seite eine Rastanordnung zu betätigen ist, um das Deckelteil mit dem Bodenteil zu verbinden.

Weiterhin ist durch das Vorsehen des Deckelteils eine sehr flexible Bestückung mit wenigstens zwei Kontaktplatten geschaffen, da die Kontaktplatten lediglich zweckmäßigerweise unlösbar fest mit dem Deckelteil zu verbinden sind und die Kontaktierung aller Kontaktplatten mit einer mehrere Leitungen aufweisenden Mehrfachleitung gemeinsam beim Verbinden des Deckelteils mit dem Bodenteil erfolgt.

Zweckmäßige Ausgestaltungen und Vorteile der Erfindung ergeben sich aus den abhängigen Ansprüchen und aus der nachfolgenden Beschreibung von Ausführungsbeispielen mit Bezug auf die Figuren der Zeichnung.

Es zeigen:
- Fig. 1: in einer perspektivischen Ansicht ein Ausführungsbeispiel einer Vorrichtung zum Kontaktieren einer spannungsführenden Leitung mit einem Bodenteil und mit einem zwei Kontaktplatten tragenden Deckelteil in einer geöffneten aufgeklappten Anordnung,
- Fig. 2: in einer perspektivischen Ansicht das Ausführungsbeispiel gemäß Fig. 1 mit dem Deckelteil und dem Bodenteil in einer geschlossenen zugeklappten Anordnung,
- Fig. 3: in einer Schnittansicht in einer ersten Querschnittsebene das Ausführungsbeispiel gemäß Fig. 1 und Fig. 2 in einer geschlossenen Anordnung des Deckelteils und des Bodenteils,
- Fig. 4: in einer Schnittansicht in einer zweiten Querschnittsebene das Ausführungsbeispiel gemäß Fig. 1 und Fig. 2 in einer geschlossenen Anordnung des Deckelteils und des Bodenteils,
- Fig. 5: in einer perspektivischen Ansicht einen Teil eines Ausführungsbeispiels einer Kleintierabwehreinrichtung mit dem anhand Fig. 1 bis Fig. 4 erläuterten Ausführungsbeispiel einer Vorrichtung zum Kontaktieren einer spannungsführenden Leitung sowie mit einer durchgehenden Doppelleitung mit dem Deckelteil und mit dem Bodenteil in einer geöffneten aufgeklappten Anordnung und
- Fig. 6: in einer perspektivischen Ansicht einen Teil eines Ausführungsbeispiels einer Kleintierabwehreinrichtung mit dem anhand Fig. 1 bis Fig. 4 erläuterten Ausführungsbeispiel einer Vorrichtung zum Kontaktieren einer spannungsführenden Leitung sowie mit einer unterbrochenen Doppelleitung mit dem Deckelteil und mit dem Bodenteil in einer geöffneten aufgeklappten Anordnung.

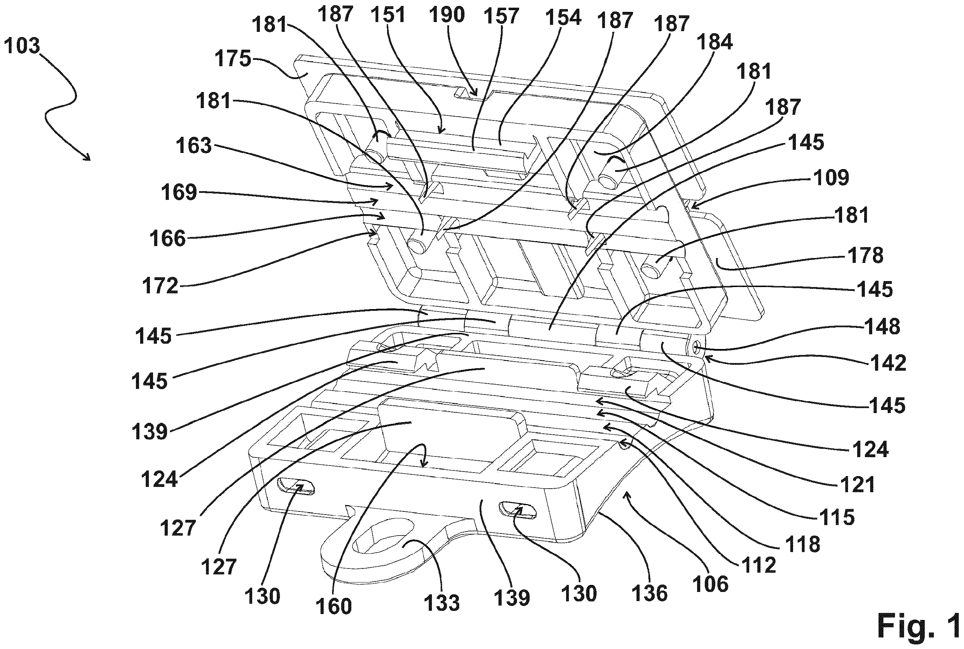

Fig. 1 zeigt in einer perspektivischen Ansicht ein Ausführungsbeispiel einer Vorrichtung gemäß der Erfindung, das als Klappkontaktiermodul 103 für eine Kleintierabwehreinrichtung ausgebildet ist. Das Klappkontaktiermodul 103 ist mit einem Bodenteil 106 und mit einem Deckelteil 109 ausgebildet, die in der Darstellung gemäß Fig. 1 in einer geöffneten aufgeklappten Anordnung abgebildet sind.

Das Bodenteil 106 weist eine quaderförmige Grundgestalt auf und ist zweckmäßigerweise aus einem elektrisch leitfähigen Material, insbesondere aus einem elektrisch leitfähigen Kunststoff, hergestellt. Im Mittenbereich ist das Bodenteil 106 mit einem ersten Halbkanal 112 und mit einem zweiten Halbkanal 115 ausgebildet, die gegenüber einem zwischenliegenden Zwischensteg 118 vertieft sind und sich in einer Längsrichtung des Bodenteils 106 erstrecken. Auf der dem Zwischensteg 118 abgewandten Seite schließt sich an den zweiten Halbkanal 115 eine Seitenstegaufnahme 121 an, die in etwa in der Ebene der Deckseite des Zwischenstegs 118 liegt.

Gegenüberliegend der Seitenstegaufnahme 121 ist das Bodenteil 106 mit einer Leitungsfixieranordnung, hier in Gestalt von zwei Befestigungsnasen 124, ausgestattet, die in einem Abstand von und gegenüber der Seitenstegaufnahme 121 erhaben angeordnet sind und die Seitenstegaufnahme 121 wenigstens abschnittsweise nasenartig überkragen.

Das Bodenteil 106 verfügt weiterhin über zwei Anschlagwände 127, die jeweils an den dem Zwischensteg 118 abgewandten Randseiten an die Halbkanäle 112, 115 des Bodenteils 106 angrenzen und über die Halbkanäle 112, 115 erhaben überstehen.

Durch diese Ausbildung des Bodenteils 106 mit Halbkanälen 112, 115, zwischenliegendem Zwischensteg 118, Seitenstegaufnahme 121 mit überkragenden Befestigungsnasen 124 sowie seitlich begrenzenden Anschlagwänden 127 ist das Bodenteil 106, wie weiter unten näher erläutert, zur vorfixierten Aufnahme einer zweiadrigen Doppelleitung beispielsweise in Gestalt einer Zwillingslitze eingerichtet.

Weiterhin lässt sich der Darstellung gemäß Fig. 1 entnehmen, dass das Bodenteil 106 zum Befestigen an einer Komponente beispielsweise eines Fahrzeugs, insbesondere eines Kraftfahrzeugs, mit Verbinderdurchführkanälen 130, durch die beispielsweise in Fig. 1 nicht dargestellte Kabelbinder durchführbar sind, und mit Ausnehmungen beispielsweise zum Durchführen von Schrauben ausgebildeten Verbindungszungen 133 ausgestattet ist. Zweckmäßigerweise erstrecken sich die Verbinderdurchführkanäle 130 rechtwinklig zu den Halbkanälen 112, 115 und sind zwischen einer Auflageseite des Bodenteils 106 sowie den Halbkanälen 112, 115 angeordnet, während die Verbindungszungen 133 an parallel zu den Halbkanälen 112, 115 verlaufenden Randwänden 139 nach außen abstehend angeformt sind. Dadurch lässt sich das Bodenteil 106 verhältnismäßig einfach an einer Komponente befestigen, da eine in dem Bodenteil 106 angeordnete Leitung oder Mehrfachleitung, insbesondere wie hier vorgesehen eine Doppelleitung, räumlich beabstandet ist.

Das Klappkontaktiermodul 103 ist weiterhin mit einer Scharnieranordnung 142 ausgestattet, die eine Anzahl von jeweils an einer sich in Längsrichtung erstreckenden Randwand 139 des Bodenteils 106 und des Deckelteils 109 angeformte Stiftaufnahmen 145 aufweist, die ineinandergreifen und bei fluchtender Anordnung von in den Stiftaufnahmen 145 ausgebildeten Stiftaufnahmeausnehmungen einen Scharnierstift 148 aufnehmen. Dadurch ist das Deckelteil 109 schwenkbar an dem Bodenteil 106 angebracht und über die Scharnieranordnung 142 bei eingeschobenem Scharnierstift 148 einseitig schwenkbar fest mit dem Bodenteil 106 verbunden.

Auf der den Stiftaufnahmen 145 gegenüberliegenden Seite ist das Klappkontaktmodul 103 mit einer Rastanordnung 151 ausgebildet, die bei diesem Ausführungsbeispiel mit einem an dem Deckelteil 109 angeformten Raststeg 154 mit nach außen überstehender Rastnase 157 und mit einer in der der Scharnieranordnung 142 gegenüberliegenden längsseitigen Randwand 139 ausgebildeten Rastnasenaufnahme 160 ausgebildet ist.

Somit ist bei einem weiter unten näher erläuterten ordnungsgemäßen Schließen des Klappkontaktiermoduls 103 das Deckelteil 109 mit dem Bodenteil 106 verriegelt, wobei sich diese Verriegelung nur durch ein Ausschieben des Scharnierstifts 148 aus den Stiftaufnahmen 145 wenigstens so weit, dass er nur noch von einer randseitigen Stiftaufnahme 145 gehalten ist, lösen lässt. Dadurch ist eine gegen jegliche unbeabsichtigte Manipulation gesicherte Verbindung zwischen dem Bodenteil 106 und dem Deckelteil 109 sichergestellt.

Weiterhin lässt sich der Darstellung gemäß Fig. 1 entnehmen, dass das Deckelteil 109 entsprechend dem Bodenteil 106 mit einem ersten Halbkanal 163, mit einem zweiten Halbkanal 166, mit einem zwischenliegenden Zwischensteg 169 und mit einer Seitenstegaufnahme 172 ausgebildet ist, um eine Doppelleitung nach Verbinden des Deckelteils 109 mit dem Bodenteil 106 zu umschließen.

An dem Deckelteil 109 sind bei dem anhand Fig. 1 erläuterten Ausführungsbeispiel der Erfindung außenseitig eine erste Kontaktplatte 175 und eine zweite Kontaktplatte 178 über eine Anzahl von Fixierstiften 181 angebracht. Die Kontaktplatten 175, 178 sind bevorzugt aus einem nicht korrodierenden Metall wie insbesondere Edelstahl hergestellt, während die Fixierstifte 181 aus Kunststoff sind und die Kontaktplatten 175, 178 unter Durchgreifen durch die Kontaktplatten 175, 178 und durch eine Deckwand 184 des Deckelteils 109, auf der außenseitig die Kontaktplatten 175, 178 aufliegen, durch Kraft- und/oder Formschluss an dem Deckelteil 109 halten.

Jede Kontaktplatte 175, 178 ist mit wenigstens einem spitzen, länglich ausgebildeten Einstechdorn 187 als Kontaktelement ausgebildet, wobei jede Kontaktplatte 175, 178 bei dem dargestellten Ausführungsbeispiel über zweckmäßigerweise zwei Einstechdorne 187 verfügt, die durch die Deckwand 184 des Deckelteils 109 durchgreifen und in jeweils einen zugeordneten Halbkanal 163, 166 des Deckelteils 109 eingreifen. Die Einstechdorne 187 dienen, wie weiter unten näher erläutert, bei einem Schließen des Klappkontaktiermoduls 103 dazu, dass jede Kontaktplatte 175, 178 mit einer ihr zugeordneten spannungsführenden Leitung beziehungsweise mit einer auf Masse liegenden Leitung elektrisch verbindbar ist.

Weiterhin lässt sich der Darstellung gemäß Fig. 1 entnehmen, dass auch das Deckelteil 109 mit einem Verbinderdurchführkanal 190 ausgebildet ist, der sich in Querrichtung auf der dem Deckelteil 109 zugewandten Unterseiten der Kontaktplatten 175, 178 erstreckt und zur Aufnahme von beispielsweise einem Kabelbinder dient, um das Klappkontaktiermodul 103 bei Bedarf auch über das Deckelteil 109 an einer Komponente eines Fahrzeugs befestigen zu können.

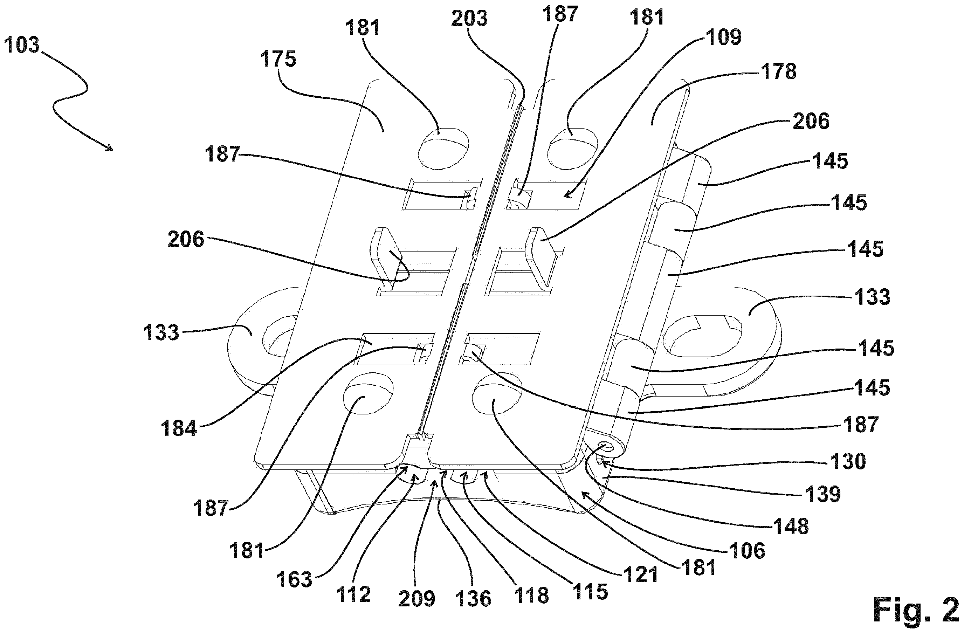

Fig. 2 zeigt in einer perspektivischen Ansicht das anhand Fig. 1 erläuterte Ausführungsbeispiel der Erfindung in Gestalt des Klappkontaktiermoduls 103 mit Blick auf die dem Deckelteil 109 abgewandte Oberseite der Kontaktplatten 175, 178. Aus Fig. 2 ist ersichtlich, dass die mit gegenüber einem Schaft breiteren tellerartigen Kopf ausgebildeten Fixierstiften 181 an dem Deckelteil 109 gehaltenen Kontaktplatten 175, 178 durch einen mittigen vorstehenden Isoliersteg 203 des Deckelteils 109 zuverlässig elektrisch voneinander isoliert sind, auch wenn sich aufgrund eines gewissen Spiels der Fixierstifte 181 die Kontaktplatten 175, 178 geringfügig bewegen sollten.

Weiterhin lässt sich der Darstellung gemäß Fig. 2 entnehmen, dass die Einstechdorne 187 beispielsweise durch Freischnitt und Umbiegen einstückig mit dem Kontaktplatten 175, 178 verbunden sind. Jede Kontaktplatte 175, 178 ist weiterhin mit wenigstens einer Aufstellzunge 206 ausgebildet, die beispielsweise nach einem Freischnitt rechtwinklig von dem Deckelteil 109 wegweisend aufgestellt ist, um die Wirkungsweise beim Vergrämen von Kleintieren wie insbesondere Mardern zu erhöhen.

Aus der Darstellung gemäß Fig. 2 lässt sich ebenfalls erkennen, dass die in der Darstellung gemäß Fig. 2 zum Teil verdeckten Halbkanäle 112, 115 des Bodenteils 106 und die Halbkanäle 163, 166 des Deckelteils 109 zusammen mit den Zwischenstegen 118, 169 sowie den Seitenstegaufnahmen 121, 172 einen Aufnahmeraum 209 umschließen, der bei dem erläuterten Ausführungsbeispiel zur Aufnahme einer in Fig. 2 nicht dargestellten Doppelleitung mit zwei elektrisch leitfähigen Leitungen und einem beide Leitungen umschließenden Isoliermantel eingerichtet ist.

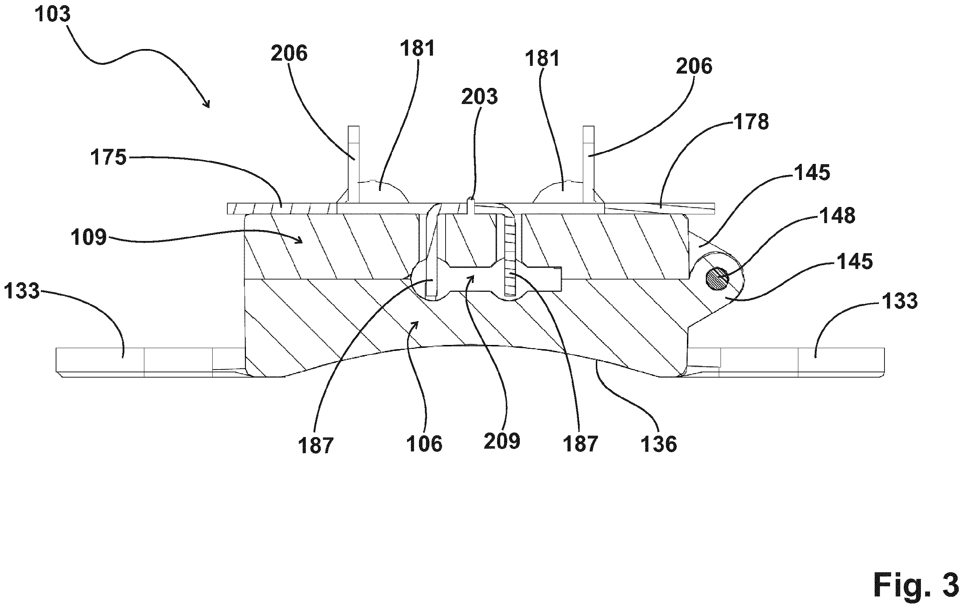

Fig. 3 zeigt in einer Schnittansicht das anhand Fig. 1 und Fig. 2 erläuterte Ausführungsbeispiel eines Klappkontaktiermoduls 103 in der geschlossenen zugeklappten Anordnung des Bodenteils 106 und des Deckelteils 109 in einer ersten Querschnittsebene, wobei die erste Querschnittebene durch ein Paar von in Querrichtung einander gegenüberliegenden Einsteckdornen 187 der ersten Kontaktplatte 175 beziehungsweise der zweiten Kontaktplatte 178 gelegt ist. Der Darstellung gemäß Fig. 3 lässt sich entnehmen, dass sich die Einstechdorne 187 in geschlossener Anordnung des Bodenteils 106 und des Deckelteils 109 bis auf einen Sicherheitsabstand zu den Bodenteil 106 im Wesentlichen über den gesamten Querschnitt des Aufnahmeraums 209 im Bereich der Halbkanäle 112, 115, 163, 166 erstrecken, so dass eine sehr zuverlässige Kontaktierung der in den Halbkanälen 112, 115, 163, 166 anzuordnenden Leitungen sichergestellt ist.

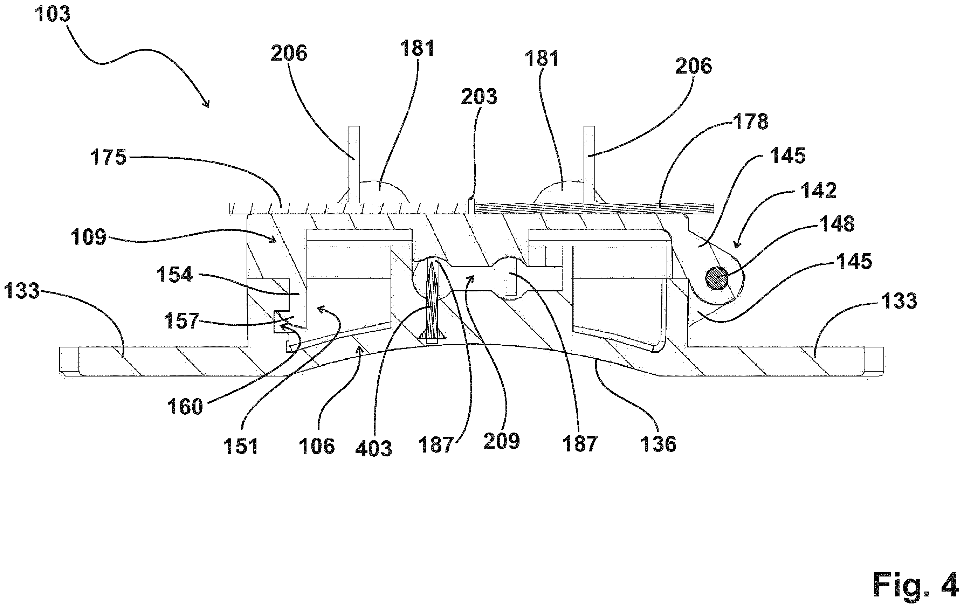

Fig. 4 zeigt in einer Schnittansicht in einer gegenüber der ersten Schnittebene gemäß Fig. 3 in Längsrichtung versetzten zweiten Querschnittebene das anhand Fig. 1 bis Fig. 3 erläuterte Ausführungsbeispiel mit dem Bodenteil 106 und mit dem Deckelteil 109 in geschlossener Anordnung, wobei die zweite Querschnittebene im Bereich der Rastanordnung 151 verläuft und einen in dem Bodenteil 106 eingebetteten und in die ersten Halbkanäle 112, 163 des Aufnahmeraums 209 vorstehenden Fixierkontaktdorn 403 als Fixierkontaktelement schneiden. Der Fixierkontaktdorn 403 ist aus einem mechanisch widerstandsfähigen sowie elektrisch leitfähigen Material wie einem Metall, insbesondere rostfreier Stahl, hergestellt und schafft eine elektrische Verbindung zwischen der in den ersten Halbkanälen 112, 163 anzuordnenden Leitung, nämlich einer auf Masse liegenden Leitung, mit dem Bodenteil 106 und damit eine insbesondere für eine autarke, nicht an das Bordnetz eines Fahrzeugs angeschlossene Kleintierabschreckeinrichtung vorteilhafte elektrische Verbindung mit einer ebenfalls auf Masse liegenden Komponente eines Fahrzeugs, an der das Klappkontaktiermodul 103 angebracht ist.

Die andere, demnach spannungsführende Leitung, die in den zweiten Halbkanälen 115, 178 anzuordnen ist, bringt die zweite Kontaktplatte 178 auf die in der den zweiten Halbkanälen 115, 166 anzuordnenden Leitung geführten Spannung, so dass ein Kleintier, welches beispielsweise mit einem Körperbereich über die erste Kontaktplatte 175 oder eine Komponente des Fahrzeugs auf Masse und mit einem anderen Körperbereich mit der unter Spannung, zweckmäßigerweise einer für das Kleintier ungefährlichen, schnell zusammenbrechenden Hochspannung stehenden zweiten Kontaktplatte 178 in Kontakt ist, aufgrund der dadurch verursachten, für das Kleintier unangenehmen aber ungefährlichen Körperreaktion vergrämt wird.

Weiterhin ist in Fig. 4 die Rastanordnung 151 mit Eingriff der Rastnase 157 in der der Scharnieranordnung 152 gegenüberliegenden Randwand 139 ausgebildeten Rastnasenaufnahme 160 dargestellt. Daraus ergibt sich, dass sich das Bodenteil 106 und das Deckelteil 109 nur durch ein hinreichend weites Ausschieben des Scharnierstifts 148 aus den Stiftaufnahmen 145 mittels eines entsprechend angepassten Werkzeugs wie einen länglichen Austreibstift mit einem gegenüber dem Scharnierstift 148 geringfügig kleineren Querschnitt voneinander trennen lassen. Diese Manipulation muss sehr zielgerichtet durchgeführt werden, so dass ein unbeabsichtigtes Lösen der Verbindung zwischen dem Bodenteil 106 und dem Deckelteil 109 ausgeschlossen ist.

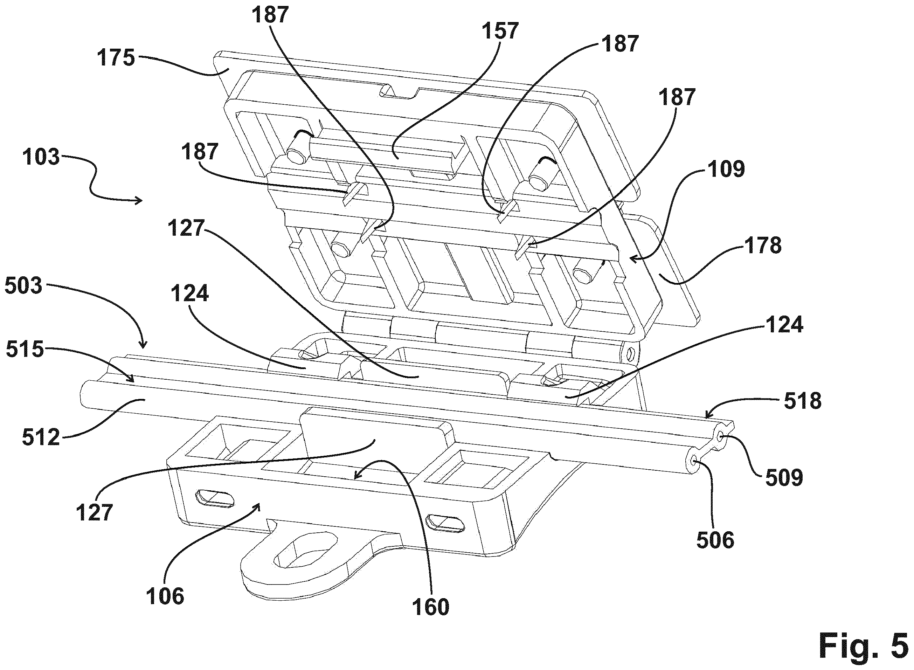

Fig. 5 zeigt in einer perspektivischen Ansicht entsprechend Fig. 1 das voranstehend erläuterte Ausführungsbeispiel einer Vorrichtung der Erfindung in Gestalt des Klappkontaktiermoduls 103 zusammen mit einer vorzugsweise als Zwillingslitze ausgestalteten Doppelleitung 503, die zusammen mit weiteren Bauteilen wie beispielsweise einem Spannungsgenerator und mit zweckmäßigerweise mehreren Klappkontaktiermodulen 103 eine Kleintierabschreckeinrichtung bilden.

Die Doppelleitung 503 verfügt über eine erste Leitung 506 und über eine zweite Leitung 509, die zweckmäßigerweise jeweils aus einer elektrisch leitfähigen, aus miteinander verdrehten feinen Drähten gebildeten Litze bestehen. Die Leitungen 506, 509 sind in einen elektrisch isolierenden, verhältnismäßig weichen gemeinsamen Isoliermantel 512 eingebettet, der zwischen den Leitungen 506, 509 einen flachen Verbindungsabschnitt 515 und für einen asymmetrischen Aufbau zum Unterscheiden der Leitungen 506, 509 für eine ordnungsgemäße Montage auf der Seite der zweiten Leitung 509 einen in der Ebene des Verbindungsabschnitts 515 seitlich nach außen überstehenden Seitensteg 518 aufweist.

In der Darstellung gemäß Fig. 5 ist die ununterbrochene Doppelleitung 503 mit dem Seitensteg 518 im Bereich der Seitenstegaufnahme 121 des Bodenteils 106 angeordnet und durch die oder jede Befestigungsnase 124 überdeckt, so dass sich durch die seitliche Fixierung über die Anschlagwände 127 sowie durch das Einstechen des oder jedes, in Fig. 5 nicht sichtbaren Fixierkontaktdorns 403 in die erste Leitung 506 in der in Fig. 5 dargestellten Vormontageanordnung mit einem noch geöffneten Deckelteil 109 die Doppelleitung 503 bereits verhältnismäßig stabil, auf jeden Fall montagesicher, fixiert ist.

Nunmehr erfolgt für die Montageanordnung ein Schwenken des Deckelteils 109 in Richtung des Bodenteils 106 bis zum Eingriff der Rastnase 157 mit der Rastnasenaufnahme 160 unter elektrischem Verbinden der ersten Kontaktplatte 175 mit der auf Masse liegenden ersten Leitung 506 und der zweiten Kontaktplatte 178 mit der spannungsführenden zweiten Leitung 509.

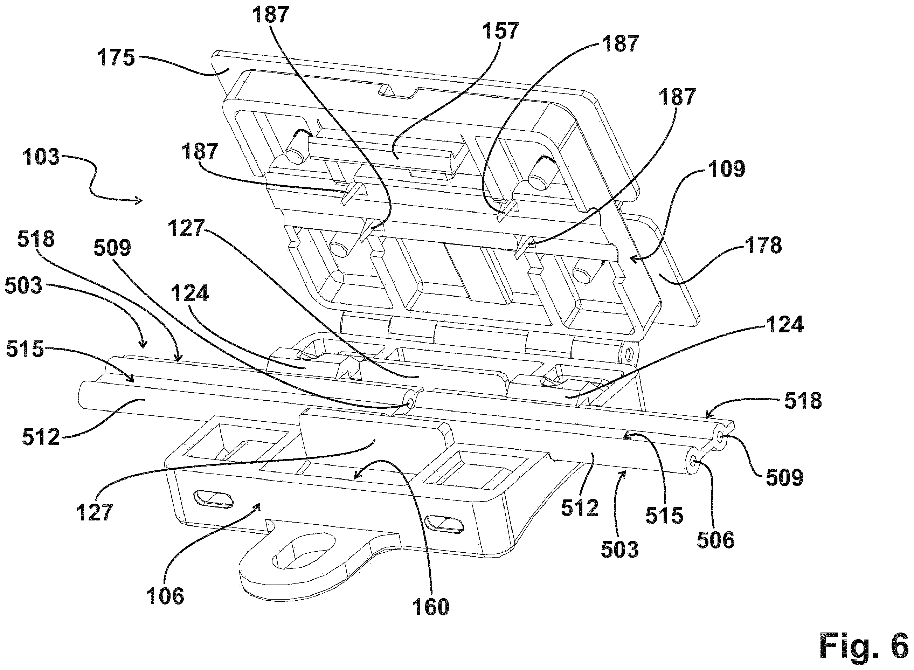

Fig. 6 zeigt in einer perspektivischen Ansicht entsprechend Fig. 5 eine Ausführung einer Kleintierabschreckeinrichtung, bei der die Enden von zwei Doppelleitungen 503 im Bereich der Anschlagwände 127 einander gegenüberliegend in den Halbkanälen 112, 115, 163, 166 angeordnet sind. Aus Fig. 6 ist ersichtlich, dass bei einem Schwenken des Deckelteils 109 in Richtung des Bodenteils 106 nach Einnehmen der Montageanordnung unter Schließen der Rastanordnung 151 die Kontaktplatten 175, 178 auf ihrem jeweiligen Potenzial sind und zwischen den beiden Doppelleitungen 503 eine elektrische Verbindung hergestellt ist. Dies ist insbesondere bei einem Einbau und/oder einer Reparatur einer Kleintierabschreckeinrichtung von Vorteil, bei der mit wenigstens zwei oder mehreren Doppelleitungen 503 gearbeitet werden muss, beispielsweise weil das Verlegen einer einzigen durchgehenden Doppelleitung 503 unpraktisch ist.

## Patentansprüche

1. Vorrichtung zum Kontaktieren wenigstens einer spannungsführenden Leitung (509) einer Kleintierabwehreinrichtung mit einem Bodenteil (106), das zur Aufnahme der oder jeder spannungsführenden Leitung (509) eingerichtet ist, und mit einer elektrisch leitfähigen sowie mit wenigstens einem Kontaktelement (187) ausgebildeten Kontaktplatte (178), die mit dem Bodenteil (106) derart verbindbar ist, dass in einer miteinander verbundenen Kontaktanordnung von Bodenteil (106) und Kontaktplatte (178) das oder wenigstens ein Kontaktelement (187) mit der oder einer spannungsführenden Leitung (509) elektrisch verbunden ist, **dadurch gekennzeichnet, dass** ein Deckelteil (109) vorhanden ist, an dem die oder jede Kontaktplatte (175, 178) auf der Außenseite (109) aufliegt und angebracht ist, dass das Deckelteil (109) über eine Scharnieranordnung (142) schwenkbar an dem Bodenteil (106) angebracht ist und dass das Deckelteil (109) in einer Schließstellung mit dem Bodenteil (106) über wenigstens eine Rastanordnung (151) gegen ein unbeabsichtigtes Aufschwenken gesichert ist sowie die oder jede Kontaktplatte (175, 178) in Kontaktanordnung mit dem Bodenteil (106) hält.

2. Vorrichtung nach Anspruch 1, **dadurch gekennzeichnet, dass** die Scharnieranordnung (142) einen das Bodenteil (106) und das Deckelteil (109) verbindenden, durch Stiftaufnahmen (145) durchgreifenden Scharnierstift (148) aufweist.

3. Vorrichtung nach Anspruch 2, **dadurch gekennzeichnet, dass** der Scharnierstift (148) derart verschiebbar ist, dass die Verbindung zwischen dem Bodenteil (106) und dem Deckelteil (109) lösbar ist.

4. Vorrichtung nach einem der Ansprüche 1 bis 3, **dadurch gekennzeichnet, dass** an dem Deckelteil (109) wenigstens zwei Kontaktplatten (175, 178) angebracht sind.

5. Vorrichtung nach Anspruch 4, **dadurch gekennzeichnet, dass** eine Kontaktplatte (178) mit der oder einer spannungsführenden Leitung (509) und eine weitere Kontaktplatte (175) mit einer auf Masse liegenden Leitung (506) verbindbar sind.

6. Vorrichtung nach einem der Ansprüche 1 bis 5, **dadurch gekennzeichnet, dass** in dem Bodenteil (106) und in dem Deckelteil (109) Halbkanäle (115, 166) für die Aufnahme einer spannungsführenden Leitung (509) ausgebildet sind.

7. Vorrichtung nach Anspruch 6, soweit auf Anspruch 5 rückbezogen, **dadurch gekennzeichnet, dass** in dem Bodenteil (106) und in dem Deckelteil (109) Halbkanäle (112, 163) für die Aufnahme einer auf Masse liegenden Leitung (506) ausgebildet sind.

8. Vorrichtung nach Anspruch 7, **dadurch gekennzeichnet**, in dem in dem Bodenteil (106) ausgebildeten Halbkanal (112) für die Aufnahme einer auf Masse liegenden Leitung (506) wenigstens ein Fixierkontaktelement (403) vorhanden ist.

9. Vorrichtung nach Anspruch 7 oder Anspruch 8, **dadurch gekennzeichnet, dass** das Bodenteil (106) aus einem elektrisch leitfähigen Material ist.

10. Vorrichtung nach einem der Ansprüche 1 bis 9, **dadurch gekennzeichnet, dass** das Bodenteil (106) wenigstens ein Befestigungselement (124) zum lösbaren Befestigen einer Leitung (506, 509) oder einer Mehrfachleitung (506, 509) aufweist.

11. Vorrichtung nach einem der Ansprüche 1 bis 10, **dadurch gekennzeichnet, dass** die oder wenigstens eine der Scharnieranordnung (142) gegenüberliegende mechanische Rastanordnung (151) mit einer Rastnase (157) und mit einer Rastnasenaufnahme (160) vorhanden ist, mit der das Bodenteil (106) und das Deckelteil (109) miteinander verrastbar sind.

12. Kleintierabwehreinrichtung mit wenigstens einer Vorrichtung (103) nach einem der Ansprüche 1 bis 11 und mit wenigstens einer spannungsführenden Leitung (509), die in Halbkanälen (115; 166) der Vorrichtung (103) angeordnet ist.

13. Kleintierabwehreinrichtung nach Anspruch 12, **dadurch gekennzeichnet, dass** wenigstens eine auf Masse liegende Leitung (506) vorhanden ist, die in Halbkanälen (112; 163) der Vorrichtung angeordnet ist.

14. Kleintierabwehreinrichtung nach Anspruch 13, **dadurch gekennzeichnet, dass** die Leitungen (506, 509) in einem gemeinsamen Isoliermantel (512) eingebettet sind.

15. Kleintierabwehreinrichtung nach Anspruch 14, **dadurch gekennzeichnet, dass** der Isoliermantel (512) asymmetrisch mit einem seitlich überstehenden Seitensteg (518) ausgebildet ist.

## Claims

1. Device for contacting at least one voltage-carrying line (509) of a small-animal deterrent with a base (106) which is set up to receive the or each voltage-carrying line (509), and with an electrically conductive contact plate (178) designed also to have at least one contact element (187), which plate can be connected to the base (106) such that, in an interconnected contact arrangement of base (106) and contact plate (178), the or at least one contact element (187) is electrically connected to the or at least one voltage-carrying line (509), **characterised in that** a cover part (109) is present against to which the or each contact plate (175, 178) abuts and is attached on the outside (109), that the cover part (109) is pivotably attached to the base (106) via a hinge arrangement (142) and that, in a closing position, the cover part (109) is secured against unintended swivelling to the base (106) via at least one catch arrangement (151), and holds the or each contact plate (175, 178) in contact arrangement with the base (106).

2. Device according to claim 1, **characterised in that** the hinge arrangement (142) has a hinge pin (148) connecting the base (106) and the cover part (109), which pin engages through pin receptacles (145).

3. Device according to claim 2, **characterised in that** the hinge pin (148) can be displaced such that the connection between the base (106) and the cover part (109) can be released.

4. Device according to one of claims 1 to 3, **characterised in that** at least two contact plates (175, 178) are attached to the cover part (109).

5. Device according to claim 4, **characterised in that** a contact plate (178) can be connected to the or at least one voltage-carrying line (509) and a further contact plate (175) can be connected to a grounded line (506).

6. Device according to one of claims 1 to 5, **characterised in that** semi-channels (115, 166) for receiving a voltage-carrying line (509) are designed in the base (106) and in the cover part (109).

7. Device according to claim 6, inasmuch as it refers to claim 5, **characterised in that** semi-channels (112, 163) for receiving a grounded line (506) are designed in the base (106) and in the cover part (109).

8. Device according to claim 7, **characterised in that** at least one fixing contact element (403) for receiving a grounded line (506) is present in the semi-channel (112) designed in the base (106).

9. Device according to claim 7 or claim 8, **characterised in that** the base (106) is made of an electrically conductive material.

10. Device according to one of claims 1 to 9, **characterised in that** the base (106) has at least one fixing element (124) for releasably fixing a line (506, 509) or a polyline (506, 509).

11. Device according to one of claims 1 to 10, **characterised in that** the or at least one mechanical catch arrangement (151) lying opposite the hinge arrangement (142) is present with a catch (157) and with a catch receiver (160), with which the base (106) and the cover part (109) can be locked together.

12. Small-animal deterrent with at least one device (103) according to one of claims 1 to 11 and with at least one voltage-carrying line (509) which is arranged in semi-channels (115; 166) of the device (103).

13. Small-animal deterrent according to claim 12, **characterised in that** at least one grounded line (506) is present which is arranged in semi-channels (112; 163) of the device.

14. Small-animal deterrent according to claim 13, **characterised in that** the lines (506, 509) are embedded in a common insulating jacket (512).

15. Small-animal deterrent according to claim 14, **characterised in that** the insulating jacket (512) is designed asymmetrically with a lateral stay (518) projecting to the side.

## Revendications

1. Dispositif pour mettre en contact au moins un conducteur sous tension (509) d'un dispositif de protection contre les petits animaux, comprenant une partie de fond (106) qui est conçue pour recevoir le ou chaque conducteur sous tension (509), et une plaque de contact (178) électriquement conductrice et réalisée avec au moins un élément de contact (187), qui peut être reliée à la partie de fond (106) de telle sorte que, dans un agencement de contact relié entre la partie de fond (106) et la plaque de contact (178), le ou au moins un élément de contact (187) est relié électriquement au ou à un conducteur sous tension (509), **caractérisé en ce qu'**il existe une partie de couvercle (109) sur laquelle la ou chaque plaque de contact (175, 178) repose sur le côté extérieur (109) et est montée, **en ce que** la partie de couvercle (109) est montée de manière pivotante sur la partie de fond (106) par l'intermédiaire d'un agencement de charnière (142) et **en ce que** la partie de couvercle (109) est bloquée dans une position de fermeture avec la partie de fond (106) par l'intermédiaire d'au moins un agencement d'encliquetage (151) pour empêcher un pivotement involontaire vers le haut et maintient la ou chaque plaque de contact (175, 178) en agencement de contact avec la partie de fond (106).

2. Dispositif selon la revendication 1, **caractérisé en ce que** l'agencement de charnière (142) présente un axe de charnière (148) reliant la partie de fond (106) et la partie de couvercle (109) et traversant des logements de tige (145).

3. Dispositif selon la revendication 2, **caractérisé en ce que** l'axe de charnière (148) peut être déplacé de telle sorte que la liaison entre la partie de fond (106) et la partie de couvercle (109) est amovible.

4. Dispositif selon l'une des revendications 1 à 3, **caractérisé en ce qu'**au moins deux plaques de contact (175, 178) sont montées sur la partie de couvercle (109).

5. Dispositif selon la revendication 4, **caractérisé en ce qu'**une plaque de contact (178) peut être reliée au ou à un conducteur sous tension (509) et une autre plaque de contact (175) peut être reliée à un conducteur (506) mis à la masse.

6. Dispositif selon l'une des revendications 1 à 5, **caractérisé en ce que** des demi-canaux (115, 166) sont formés dans la partie de fond (106) et dans la partie de couvercle (109) pour recevoir un conducteur sous tension (509).

7. Dispositif selon la revendication 6, dans la mesure où il se rapporte à la revendication 5, **caractérisé en ce que** des demi-canaux (112, 163) sont formés dans la partie de fond (106) et dans la partie de couvercle (109) pour recevoir un conducteur (506) mis à la masse.

8. Dispositif selon la revendication 7, **caractérisé en ce qu'**au moins un élément de contact de fixation (403) est présent dans le demi-canal (112) formé dans la partie de fond (106) pour recevoir un conducteur (506) mis à la masse.

9. Dispositif selon la revendication 7 ou la revendication 8, **caractérisé en ce que** la partie de fond (106) est en un matériau électriquement conducteur.

10. Dispositif selon l'une des revendications 1 à 9, **caractérisé en ce que** la partie de fond (106) comprend au moins un élément de fixation (124) pour fixer de manière amovible un conducteur (506, 509) ou un conducteur multiple (506, 509).

11. Dispositif selon l'une des revendications 1 à 10, **caractérisé en ce que** le ou au moins un agencement d'encliquetage mécanique (151) opposé à l'agencement de charnière (142) est présent avec un ergot d'encliquetage (157) et avec un logement d'ergot d'encliquetage (160), avec lequel la partie de fond (106) et la partie de couvercle (109) peuvent être encliquetées l'une avec l'autre.

12. Dispositif de protection contre les petits animaux comprenant au moins un dispositif (103) selon l'une des revendications 1 à 11 et au moins un conducteur sous tension (509) disposé dans des demi-canaux (115 ; 166) du dispositif (103).

13. Dispositif de protection contre les petits animaux selon la revendication 12, **caractérisé en ce qu'**il existe au moins un conducteur (506) mis à la masse, qui est disposé dans des demi-canaux (112 ; 163) du dispositif.

14. Dispositif de protection contre les petits animaux selon la revendication 13, **caractérisé en ce que** les conducteurs (506, 509) sont intégrés dans une enveloppe isolante commune (512).

15. Dispositif de protection contre les petits animaux selon la revendication 14, **caractérisé en ce que** l'enveloppe isolante (512) est réalisée de manière asymétrique avec une nervure latérale (518) dépassant latéralement.
